# EUROPEAN PATENT APPLICATION

(11) **EP 2 808 361 A1**
(43) Date of publication of application: **03.12.2014**
(21) Application number: 13169433.3
(22) Date of filing: 28.05.2013
(51) Int. Cl.: C08L 33/14, C08K 7/02, C08J 5/04

(54) **Composite Composition containing a Polycyclic Ether Polyol**

(71) Applicant: Allnex Belgium, S.A., 1070 Brussels (BE)
(72) Inventor: Cappelle, Steven, 9400 Ninove (BE); Vrijsen, Stijn, 1654 Huizingen (BE)
(74) Representative: Schoofs, Hilde

(57) **Abstract**

The present invention relates to a composite composition comprising:
I. a resin composition (I), comprising
A. at least one (meth)acrylated compound (A) prepared from:
(a) at least one polycyclic ether polyol (a),
(b) optionally, at least one linking compound (b1) and/or (b2),
(c) at least one (meth)acrylating compound (c),

B. optionally, one or more radiation curable oligomer (B),
C. optionally, one or more radiation curable monomer (C),
D. optionally, one or more photo- and/or thermal initiators (D), and

at least 1wt% of a fibrous reinforcement material (II) relative to the total weight of the resin composition (I) and the fibrous reinforcement material (II).

The present invention further relates to its preparation and uses.

## Description

The present invention relates to the field of radiation curable composite compositions comprising a resin composition and a fibrous reinforcement material; to their preparation and their uses. In particular, the present invention relates to such composite compositions particularly suitable for forming or repairing composite articles.

### Background of the invention

State-of-the-art composite manufacturing techniques are not cost effective due to the long curing and cooling cycle times. This prevents their use in high volume applications. The use of radiation curing in composite manufacturing can significantly reduce this cycle time since curing takes place very quickly and at low temperature. This makes it suitable for high volume production of composite parts.

Composite parts include but are not limited to e.g. truck and bulldozer bodies, parts of small series cars, aerospace parts, iron housing, headlight reflectors, prototypes, sailboards, canoes, swimming pools, aesthetic components in trucks, cars, electrical enclosures, household appliances, car underbody protection, automotive backseat structures, ladders, cable trays, staircases, I-beams, panels for trains, buses, storage tanks, pressure vessels, fishing rods, pipes, amongst others.

Current field level repair techniques use thermally accelerated adhesive bonding to restore the original design strength of the composite article. In practice, several problems exist with composite article (e.g. aircraft or windmill) thermally cured repair methods. These structural members act as heat sinks, and make it difficult to obtain a uniform cure temperature profile. Excessive power requirements can result from efforts to offset this heat sinking effect. Also, commonly used resin systems require low temperature storage (to avoid premature degradation), high storage cost and support complexity. Furthermore, the thermally accelerated composite manufacturing technique requires heat blankets for cure that can be difficult to work with depending on the size and geometry of the aircraft part being repaired.

For these reasons, UV light curable composite compositions have been developed. U.S. Pat. N° 7,291,657 discloses such a UV curable composite composition to be applied to fiberglass. In order to achieve high glass transition temperatures, U.S. Pat. N° 7,291,657 uses aromatic difunctional epoxy acrylates. However, this type of compounds has the drawbacks of having a high viscosity and may be sensitive to yellowing upon ageing due to the aromatic nature of the structures.

### Summary of the invention

Against this background we now provide in a first aspect a composite composition comprising:
I. a resin composition (I), comprising
   A. at least one (meth)acrylated compound (A) prepared from:
      (a) at least one polycyclic ether polyol (a),
      (b) optionally, at least one linking compound (b1) and/or (b2), wherein the linking compound (b1) is selected from cyclic compounds (b11) containing at least one -C(O)-X- group in the cycle where X = O or NH, from hydroxy acids (b12) and/or from alkylene oxides (b13) containing from 2 to 4 carbon atoms, and wherein the linking compound (b2) is selected from epihalohydrins or polyisocyanates,
      (c) at least one (meth)acrylating compound (c), wherein if both compounds (b1) and (b2) are being used, compound (b1) forms a moiety that links the polycyclic ether polyol (a) to the linking compound (b2) which attaches to the (meth)acrylating compound (c), ,
   B. optionally, one or more radiation curable oligomer (B),
   C. optionally, one or more radiation curable monomer (C),
   D. optionally, one or more photo- and/or thermal initiators (D), and
II. at least 1wt% of a fibrous reinforcement material (II) relative to the total weight of the resin composition (I) and the fibrous reinforcement material (II).

Composite compositions of the present invention may present one or more of the following advantages:
- they may be suitable for high volume applications;
- they may be used to form a large variety of composite articles;
- they may be suitable for obtaining composite articles while experiencing little shrinkage upon curing, thereby preventing warpage and/or poor part fitting;
- they may have a low toxicity;
- they may be free of bisphenol A;
- they may be free of styrene; and
- they may have a low tendency to yellow due to the cycloaliphatic nature of the resin.

In a second aspect, the present invention relates to a composite article obtainable by the crosslinking of the composite composition according to any embodiment of the first aspect.

Composite articles of the invention may present one or more of the following advantages:
- They may have high glass transition temperature and good thermal resistance;
- They may have high tensile modulus;
- They may have high storage modulus; and
- They may have a high renewable content.

In a third aspect, the present invention relates to the use of the composite composition according to the first aspect for forming a composite article.

This may present one or more of the following advantages:
- It may be fast;
- It may be performed at low temperature;
- It may be performed on demand, thereby facilitating handling in industrial production;
- It may be cost effective,
- It may be used in high volume applications,
- It may require a low energy consumption in part due to the absence of need for heating up autoclaves.
- The use of heat blankets may be not required for cure; and
- It may be easy to perform even for producing parts of high complexity and/or size.

In a fourth aspect, the present invention relates to a process for forming a composite composition comprising contacting i) a resin composition (I) and ii) at least 1wt% of a fibrous reinforcement material (II) relative to the total weight of the resin composition (I) and the fibrous reinforcement material (II) by a liquid composite manufacturing process, the resin composition comprising
A. at least one (meth)acrylated compound (A) prepared from:
   (a) at least one polycyclic ether polyol (a),
   (b) optionally, at least one linking compound (b1) and/or (b2), wherein the linking compound (b1) is selected from cyclic compounds (b11) containing at least one - C(O)-X- group in the cycle where X = O or NH, from hydroxy acids (b12) and/or from alkylene oxides (b13) containing from 2 to 4 carbon atoms, and wherein the linking compound (b2) is selected from epihalohydrins or polyisocyanates,
   (c) at least one (meth)acrylating compound (c), wherein if both compounds (b1) and (b2) are being used, compound (b1) forms a moiety that links the polycyclic ether polyol (a) to the linking compound (b2) which attaches to the (meth)acrylating compound (c),
B. optionally, one or more radiation curable oligomer (B),
C. optionally, one or more radiation curable monomer (C), and
D. optionally, one or more photo- and/or thermal initiators (D).

This process involving said resin composition (I) may present one or more of the following advantages:
- The resin composition (I) may be of low viscosity, facilitating its use in a liquid composite manufacturing process;
- The resin composition (I) may have a good pot life even at room temperature;
- The storing costs of the resin composition (I) may be low; and
- The support complexity for the resin composition (I) storage may be low.

In a fifth aspect, the present invention relates to the use of the composite composition according to the first aspect for repairing an article part made of a composite material.

It may present one or more of the following advantages:
- The repairing may be performed at room temperature or with limited heating, thereby enabling a uniform cure temperature profile,
- The power requirement may be low
- The repairing may restore the original strength of the article part,
- The repairing may be easy to perform even on parts of high complexity and/or size.

In a sixth aspect, the present invention relates to a substrate coated with a composite composition according to the first aspect of the present invention. The composite composition can be cured or not cured.

### Brief description of the drawing

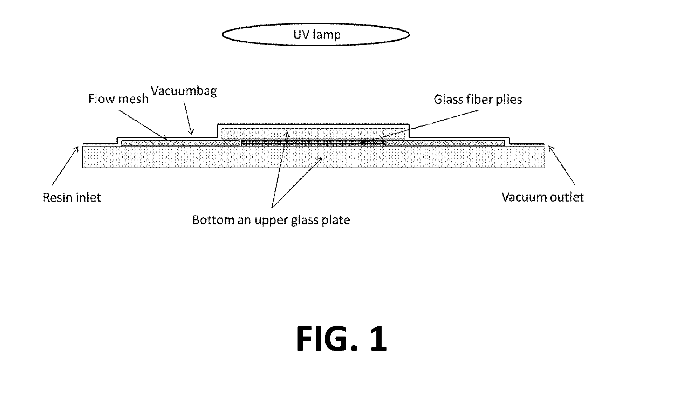

Fig.1 schematically represents a method for forming a composite composition according to an embodiment of the present invention.

### Detailed description of the invention

In a first aspect, the present invention relates to a composite composition comprising:
I. a resin composition, comprising
   A. at least one (meth)acrylated compound (A) prepared from:
      (a) at least one polycyclic ether polyol (a),
      (b) optionally, at least one linking compound (b1) and/or (b2), wherein the linking compound (b1) is selected from cyclic compounds (b11) containing at least one -C(O)-X- group in the cycle where X = O or NH, from hydroxy acids (b12) and/or from alkylene oxides (b13) containing from 2 to 4 carbon atoms, and wherein the linking compound (b2) is selected from epihalohydrins or polyisocyanates,
      (c) at least one (meth)acrylating compound (c), wherein if both compounds (b1) and (b2) are being used, compound (b1) forms a moiety that links the polycyclic ether polyol (a) to the linking compound (b2) which attaches to the (meth)acrylating compound (c),
   B. optionally, one or more radiation curable oligomer (B),
   C. optionally, one or more radiation curable monomer (C),
   D. optionally, one or more photo- and/or thermal initiators (D), and
II. at least 1wt% of a fibrous reinforcement material (II) relative to the total weight of the resin composition (I) and the fibrous reinforcement material (II).

In a first main embodiment of the first aspect, the present invention may relate to a composite composition comprising:
I. a resin composition, comprising
   A. at least one (meth)acrylated compound (A) prepared from:
      (a) at least one polycyclic ether polyol (a), and
      (c) at least one (meth)acrylating compound (c),
   B. optionally, one or more radiation curable oligomer (B),
   C. optionally, one or more radiation curable monomer (C),
   D. optionally, one or more photo- and/or thermal initiators (D), and
II. at least 1wt% of a fibrous reinforcement material (II) relative to the total weight of the resin composition (I) and the fibrous reinforcement material (II).

In this embodiment, no linking compound (b) is present.

In a second main embodiment, the present invention may relate to a composite composition comprising:
I. a resin composition, comprising
   A. at least one (meth)acrylated compound (A) prepared from:
      (a) at least one polycyclic ether polyol (a),
      (b) at least one linking compound (b1) and/or (b2), wherein the linking compound (b1) is selected from cyclic compounds (b11) containing at least one -C(O)-X- group in the cycle where X = O or NH, from hydroxy acids (b12) and/or from alkylene oxides (b13) containing from 2 to 4 carbon atoms, and wherein the linking compound (b2) is selected from epihalohydrins or polyisocyanates, and
      (c) at least one (meth)acrylating compound (c), wherein if both compounds (b1) and (b2) are being used, compound (b1) forms a moiety that links the polycyclic ether polyol (a) to the linking compound (b2) which attaches to the (meth)acrylating compound (c),
   B. optionally, one or more radiation curable oligomer (B),
   C. optionally, one or more radiation curable monomer (C),
   D. optionally, one or more photo- and/or thermal initiators (D), and
II. at least 1wt% of a fibrous reinforcement material (II) relative to the total weight of the resin composition (I) and the fibrous reinforcement material (II).

In this embodiment, a linking compound (b) is present.

In an embodiment of the first aspect, the resin composition (I) may comprise from 10 to 100 weight percent of the (meth)acrylated compound (A); from 0 to 90 weight percent of one or more radiation curable oligomers (B); from 0 to 80 weight percent of one or more radiation curable monomers (C); and from 0 to 10 weight percent of one or more photo- and/or thermal initiators (D).

In an embodiment of the first aspect, the resin composition (I) may comprise from 20 to 100 weight percent of the (meth)acrylated compound (A); from 0 to 80 weight percent of one or more radiation curable oligomers (B); from 0 to 80 weight percent of one or more radiation curable monomers (C); and from 0 to 5 weight percent of one or more photo- and/or thermal initiators (D).

In an embodiment of the first aspect, the resin composition (I) may comprise from 30 to 100 weight percent of the (meth)acrylated compound (A); from 0 to 70 weight percent of one or more radiation curable oligomers (B); from 0 to 70 weight percent of one or more radiation curable monomers (C); and from 0 to 3 weight percent of one or more photo- and/or thermal initiators (D). In the description below, more specific contents for compounds (A), (B), (C), and (D) are disclosed. These contents can be combined with each other and/or substitute a corresponding range above to form a specific embodiment.

In an embodiment of the first aspect, the resin composition (I) may have a glass transition temperature of not lower than 80°C, preferably not lower than 100°C after crosslinking. This is advantageous as it imparts a higher thermal resistance to the composite composition. In an embodiment of the first aspect, the resin composition (I) may have a viscosity measured at 25°C of at most 100000 mPa.s, preferably at most 10000 mPa.s, more preferably at most 2000 mPa.s. For instance, it may be in the range of from 20 to 100000 mPa.s. More preferably the viscosity at this temperature may be in the range of from 50 to 10000 mPa.s, most preferably from 50 to 2000 mPa.s.

In an embodiment of the first aspect, the resin composition (I) may have a viscosity at the temperature of application (e.g. at 25°C, 40°C or 60°C) of at most 100000 mPa.s, preferably at most 10000 mPa.s, more preferably at most 2000 mPa.s. For instance, it may be in the range of from 20 to 100000 mPa.s. More preferably the viscosity at this temperature may be in the range of from 50 to 10000 mPa.s, most preferably from 50 to 2000 mPa.s.

A viscosity of at most 10000 mPa.s is advantageous as it permits the use of the resin composition (I) in some liquid composite manufacturing processes.

A viscosity of at most 2000 mPa.s is advantageous as it permits the use of the resin composition (I) in most resin infusion or resin injection processes.

In the first aspect, the amount of (meth)acrylated compound (A) in the resin composition (I) may be from 10 to 100 wt%. In embodiments, it may be at most 90wt% or at most 80 wt%.

In some embodiments, the amount of (meth)acrylated compound (A) in the resin composition (i) may be at least 15wt%, at least 20wt%, at least 40wt%, or at least 60wt%. Any minimal amount cited above may be combined with any maximal amount cited above. For instance, the amount of the (meth)acrylated compound (A) in the resin composition (I) may be at least 20wt% and at most 80wt%. A High proportion of (meth)acrylated compound (A) is advantageous as it permits obtaining thermally resistant composite articles experiencing little shrinkage upon curing, thereby preventing warpage and/or poor part fitting.

In an embodiment of the first aspect, the at least one (meth) acrylated compound (A) may be at least one di (meth)acrylated compound (A).

In an embodiment of the first aspect, the (meth)acrylated compound (A) may be selected from the di(meth)acrylate of a dianhydrohexiol and the ethoxylated and/or propoxylated derivatives thereof.

In an embodiment of the first aspect, the (meth)acrylated compound (A) may be selected from isosorbide diacrylate, isosorbide dimethacrylate and ethoxylated and/or propoxylated derivatives thereof.

In an embodiment, the sum of (a), (b) and (c) in the composition of the (meth)acrylated compound (A) may represent at least 90 mol% and preferably at least 95 mol% of the building blocks entering the preparation of the (meth)acrylated compound (A). In these embodiments,(A) may be said to be prepared from at least building blocks (a) and (c), and optionally building block (b) and/or other building blocks. More preferably, the sum of (a), (b) and (c) represents 100 mol% of the building blocks entering the preparation of the (meth)acrylated compound (A). In this embodiment, (A) may be said to be directly prepared from (a), (c) and optionally (b).

In an embodiment, the (meth)acrylated compound (A) may have a high renewable content. For instance compounds (A) can be prepared wherein at least 1% by weight, at least 2% by weight, at least 5% by weight, at least 10% by weight, even at least 20% by weight of the raw materials used to prepare said compound are from renewable origin, i.e. derived from a renewable biological feedstock, such as, for example, agricultural, forestry, plant, bacterial or animal feedstock. This has obvious ecological advantages.

In an embodiment, the (meth)acrylated compound (A) may have a molecular weight in the range from 200 to 2000 Daltons as theoretically calculated on the basis of the reagents amounts used. More typically, the molecular weight is at least 250 Daltons. In general, the molecular weight is at most 1500 Daltons, more preferably at most 1000 Daltons. For instance, it can be at most 500 Daltons. Too high a molecular weight for compound (A) is disadvantageous because it tends to increase the viscosity of the resin composition, making it less suitable for liquid composite manufacturing processes.

Preferably (meth)acrylated compounds (A) of the invention have a viscosity as measured at 25°C ranging from 300 to 40.000 mPa.s. Typically the viscosity is at most 25.000 mPa.s, more preferably at most 10.000 mPa.s.

Polycyclic ether polyols (a) are compounds having at least one polycyclic ether group and at least two hydroxyl groups.

In an embodiment, the at least one polycyclic ether polyol (a) may be selected from dicyclic ether polyols and/or tricyclic ether polyols. Preferably, the at least one polycyclic ether polyol is at least one dicyclic ether polyol.

In an embodiment of the first aspect, the polycyclic ether polyol (a) may be a dianhydrohexitol sugar diol.

Examples of dianhydrohexitol are dianhydromannitol, dianhydrosorbitol, dianhydroiditol and mixtures thereof. The dianhydrohexitol is preferably dianhydrosorbitol, most preferably, isosorbide. A few companies have specialized in their production. We found these compounds to have the surprising effect to both higher the thermal resistance and limit the shrinkage of the resulting composite compositions upon curing. As an example, the polycyclic ether polyol (a) may be the isosorbide diol available at Roquette under the trade name Polysorb P.

In an embodiment of the first aspect, said at least one polycyclic ether polyol (a) may be selected so that the homopolymer of the corresponding (meth)acrylated compound (A) (typically formed by crosslinking) has a glass transition temperature of at least 130°C. (Meth)acrylated compounds (A) prepared from such polycyclic ether polyol are advantageous because they impart higher thermal resistance to the composite composition.

In an embodiment of the first aspect, the polycyclic ether polyol (a) may be derived from a renewable origin. In other words, preferred polycyclic ether polyols (a) may be bioderived polycyclic ether polyols that are compounds derived from a renewable biological feedstock, such as, for example, agricultural, forestry, plant, bacterial or animal feedstock. This has obvious ecological advantages.

By linking compound (b1) is meant to designate a compound capable of forming a moiety that links the polycyclic ether polyol (a) to either the linking compound (b2) where present or to the (meth)acrylating agent (c). Compound (b1) bears at least one group reactive towards hydroxyl groups and at least one group reactive towards either the linking compound (b2) or the (meth)acrylating agent (c). This last group can be originally present on compound (b1) or be the result of the reaction of (b1) with the polyol. Compound (b1) is generally selected from cyclic compounds (b11) containing at least one group in the cycle where X = O or NH, from hydroxyl acids such as glycolic and/or lactic acid (b12) and/or from alkylene oxides (b13) containing from 2 to 4 carbon atoms.

Compound (b11) is advantageously a compound wherein X is oxygen. Suitable cyclic compounds (b11) include lactones, lactams, lactides, glycolides, cyclic carbonates and mixtures thereof. Preferred cyclic compounds (b11) are lactones, lactides and mixtures thereof. Particularly preferred lactones are ε-caprolactone, δ-valerolactone, γ-butyrolactone, and lactones of hydroxycarboxylic acids such as 2-hydroxycarboxylic acids, e.g. glycolic acid and lactic acid, 3-hydroxycarboxylic acids, e.g. 3-hydroxypropionic acid, 3-hydroxybutyric acid, 3-hydroxyvaleric acid and hydroxypivalic acid. More preferred are ε-caprolactone, δ-valerolactone, γ-butyrolactone and mixtures thereof, most preferred is ε-caprolactone. Particularly preferred lactides are L-, meso- and/or D-lactide and mixtures thereof. More preferred cyclic compounds (b11) are lactides. Lactides are advantageously bioderived lactides.

Compound (b12) is a hydroxy acid meaning a compound bearing one hydroxyl group and one carboxylic acid group. Compound (b12) may correspond to the open form of the above listed lactones. Preferred compounds (b12) are glycolic acid also named hydroxyacetic acid and lactic acid also named 3-hydroxypropionic acid.

Suitable compounds (b13) include ethylene oxide, propylene oxide, butylene oxide and mixtures thereof. Preferred are ethylene oxide, propylene oxide and mixtures thereof.

Linking compound (b2) is typically selected from epihalohydrins or polyisocyanates. Epihalohydrins are compounds having a halomethyl oxirane skeleton (scheme 1) wherein X is a halogen atom. Preferred epihalohydrins are epifluorohydrin, epichlorohydrin (also known as epichlorhydrin), epibromohydrin, and/or epiiodohydrin. More preferred is epichlorhydrin.

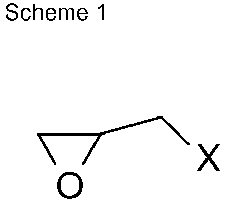

By polyisocyanate is meant to designate a compound containing at least two isocyanate groups. Typically the polyisocyanate contains not more than six isocyanate groups, more preferably not more than three isocyanate groups. More typically it is a diisocyanate. Polyisocyanates may be selected from one or more aliphatic, cycloaliphatic, aromatic, heterocyclic polyisocyanates well known in the art and mixtures thereof. Examples of aliphatic and cycloaliphatic polyisocyanates that may be used are: 1,6-diisocyanatohexane (HDI), 1,1'-methylene bis[4-isocyanatocyclohexane] (H12MDI), 5-isocyanato-1-isocyanatomethyl-1,3,3-trimethylcyclohexane (isophorone diisocyanate, IPDI). Aliphatic polyisocyanates containing more than two isocyanate groups are for example the derivatives of above mentioned diisocyanates like 1,6-diisocyanatohexane biuret and isocyanurate. Examples of aromatic polyisocyanates that may be used are 1,4-diisocyanatobenzene (BDI), 2,4-diisocyanatotoluene (TDI), 1,1'-methylenebis[4-isocyanatobenzene] (MDI), xylilene diisocyanate (XDI), 1,5-naphtalene diisocyanate (NDI), tolidine diisocyanate (TODI), tetramethylxylylene diisocyanate (TMXDI) and p-phenylene diisocyanate (PPDI). Other examples of polyisocyanates that may be used in the context of the invention are trimethyl hexamethylene diisocyanate, 4,4'-diisocyanatodicyclohexylmethane, 4,4'-diisocyanatodiphenylmethane, the technical mixtures with 2,4-diisocyanatodiphenylmethane and also the higher homologues of above mentioned diisocyanates, 2,4-diisocyanatotoluene and technical mixtures of them with 2,6-diisocyanatotoluene, as well as the copolymerization product of 3-isopropenyl-α,α'-dimethylbenzyl isocyanate (TMI). Preferred are aliphatic polyisocyanates, most preferred are aliphatic diisocyanates.

As an optional feature, at least one compound (b2) is used, if a compound (b13) is being used.

Preferably, no linking compound is used.

In a preferred embodiment, linking compound (b) is not present.

By (meth)acrylating compound (c) is meant to designate a compound comprising at least one (meth)acryloyl group and at least one group reactive towards compounds (a), (b1) or (b2), depending on the compounds used for the preparation of the (meth)acrylated compound (A), or towards the reaction products of (b1) or (b2) with the polycyclic ether polyol (a). Typically (meth)acrylating compounds (c) are selected from compounds (c1) and/or from compounds (c2).

Compounds (c1) are selected from unsaturated acids and suitable equivalent thereof. Examples of suitable equivalents are for instance the acyl halide of the unsaturated acid, the corresponding anhydride of the unsaturated acid and/or a lower alkyl ester of the unsaturated acid. With lower alkyl is meant a C₁-C₄ alkyl. Particularly suited for use in the present invention are (meth)acrylic acid, (meth)acrylic acid anhydride, a (meth)acrylic acid halide, and/or a lower alkyl ester of (meth)acrylic acid. Examples of suitable (meth)acrylic acid halides are (meth)acrylic acid chloride, (meth)acrylic acid bromide and/or (meth)acrylic acid iodide. By a lower alkyl ester is meant to designate in particular the lower alcohol ester of an unsaturated acid such as (meth)acrylic acid. The lower alcohol preferably is an aliphatic C₁-C₄ alcohol. Preferred lower alkyl esters are for instance methyl esters, ethyl esters, n-propyl esters and/or iso-propyl esters of (meth)acrylic acid. When a (meth)acrylic acid halide and/or (meth)acrylic acid anhydride is used, it is desirable to work in anhydrous conditions to avoid compounds hydrolysis. Preferred for use in the invention are unsaturated monoacids. A most preferred compound (c1) is (meth)acrylic acid (methacrylic acid or acrylic acid).

Compounds (c2) are compounds that contain at least one reactive group capable to react with isocyanate groups as well as at least one (meth)acryloyl group. Typically compounds (c2) are compounds that contain at least one (meth)acryoyl group and one (or essentially one) nucleophilic function capable of reacting with isocyanate groups, such as a hydroxyl group. Other possible groups are amino and/or thiol groups. Hydroxyl groups though are preferred. Useful compounds (c2) include the esterification products of aliphatic and/or aromatic polyols with (meth)acrylic acid having a residual average hydroxyl functionality of about 1. Mono(meth)acryloyl mono-hydroxy compounds as well as poly(meth)acryloyl mono-hydroxy compounds can be used.

Preferred mono(meth)acryloyl mono-hydroxy compounds are hydroxymethyl (meth)acrylate, hydroxyethyl (meth)acrylate, hydroxypropyl (meth)acrylate and/or hydroxybutyl (meth)acrylate.

Preferred examples of poly(meth)acryloyl mono-hydroxy compounds are compounds comprising at least two (meth)acryl functions such as glycerol di(meth)acrylate, trimethylolpropane di(meth)acrylate, , pentaerythritol tri(meth)acrylate, ditrimethylolpropane tri(meth)acrylate, dipentaerythritol penta(meth)acrylate and their (poly)ethoxylated and/or (poly)propoxylated equivalents. More preferred poly(meth)acryloyl mono-hydroxy compounds are glycerol di(meth)acrylate, trimethylolpropane di(meth)acrylate. Most preferred are the acrylate derivatives.

In this context, it is also possible to use reaction products of such polyols with ethylene oxide, propylene oxide and/or lactones, which add to these polyols in a ring-opening reaction. Examples of suitable lactones are ε-caprolactone, δ-valerolactone, γ-butyrolactone. Glycolides and lactides can be used for the same purpose. These modified or unmodified polyols are partly esterified with acrylic acid, methacrylic acid or mixtures thereof until the desired residual hydroxyl functionality is reached. Examples of useful compounds in this category are Tone M100 (Dow Chemicals), Bisomer PEMCURE 12A (Cognis) and/or the reaction products (or adducts) of a (meth)acryloyl hydroxy compound and for instance Galacid Slow release (GALACTIC SA), FUTERRO® Lactide LF (Futerro), PURALACT® L, PURALACT® D or PURASORB ® G (Purac), or mixtures of these (of any of these).

Compounds (c2) obtained from the reaction of (meth)acrylic acid with aliphatic, cycloaliphatic or aromatic compounds bearing an epoxy functionality, forming a compound bearing a hydroxyl functionality together with at least one (meth)acrylic functionality can be used as well.

Most preferred compounds (c2) are hydroxyethylacrylate, glycerol diacrylate, trimethylolpropane diacrylate and mixtures thereof.

Preferably, no linking compound (b) is present. When no linking compound is present, compound (A) may be prepared by a condensation reaction of a polycyclic ether polyol with a compound (c1) e.g. (meth)acrylic acid.

In some embodiments, a linking compound (b) may be present.

In a first embodiment wherein a linking compound is present, the (meth)acrylated compound (A) may be prepared from a polycyclic ether polyol (a), a linking compound (b2) selected from epihalohydrins and a (meth)acrylating compound (c1) selected from unsaturated acids. In this first embodiment, the compound (b2) links the polycyclic ether polyol (a) to the (meth)acrylating compound (c1). Compound (A) according to this first embodiment can be prepared in different ways. The compound (A) may for instance be prepared by a process comprising a first step wherein the polycyclic ether polyol is reacted with the epihalohydrin to form a product having one or more epoxy groups, and a second step comprising the reaction of the product obtained in the first step with one or more suitable (meth)acrylating compounds. The reaction is generally conducted under heat and in the presence of one or more catalysts. Although solvent is not required, it may be used to facilitate the heat and mass transfer and one or more polymerization inhibitors may be added during or after the reaction. Depending on the reaction conditions and reaction stoichiometry, the reaction of the polycyclic ether polyol (a) with the linking compound (b2) can lead to an extended structure comprising the repetition of (a)-(b2) links and terminated by epoxy groups. However, the preferred structures are not extended. After reaction with the (meth)acrylating compound (b2), the preferred (meth)acrylated compound (A) contains essentially no residual epoxy group. Typically, the (meth)acrylated compound (A) has a residual epoxy value below 0.1 milliequivalent per gram of compound (A).

In a second embodiment wherein a linking compound is present, the (meth)acrylated compound (A) may be prepared from a polycyclic ether polyol (a), a linking compound (b2) selected from polyisocyanates, a (meth)acrylating compound selected from (c2) compounds. In this second embodiment, the compound (b2) links the polycyclic ether polyol (a) to the (meth)acrylating compound (c2). Compound (A) according to this second embodiment can be produced in many ways. For example, compounds (a), (b2) and (c2) may be reacted together at once. Alternatively, compound (A) may be made by pre-reacting a polyisocyanate (b2) with a (meth)acrylating compound (c2) to form an adduct with at least one free isocyanate group, which is later reacted with a polycyclic ether polyol (a); or a polycyclic ether polyol (a) and polyisocyanate (b2) may be reacted first and this product reacted further with a (meth)acrylating compound (c2). The reaction is generally conducted under heat and in the presence of one or more catalysts. Although solvent is not required, it may be used to facilitate the heat and mass transfer and one or more polymerization inhibitors may be added during or after the reaction. Depending on the reaction conditions and reaction stoichiometry, the reaction of the polycyclic ether polyol (a) with the linking compound (b2) can lead to an extended structure comprising the repetition of (a)-(b2) links and terminated by isocyanate groups. However, the preferred structures are not extended. After reaction with the (meth)acrylating compound (b2), the preferred (meth)acrylated compound (A) contains essentially no residual isocyanate group. Typically, the (meth)acrylated compound (A) has a residual isocyanate value below 0.2 % NCO. In a variant of these two first embodiments wherein a linking compound is present, a linking compound (b1) is further used for the preparation of the (meth)acrylated compound (A). The linking compound (b1) is typically selected from compounds (b11), from (b12) and/or from (b13), preferably from (b11) compounds. Preferred compounds (b11) are selected from lactones, lactams, lactides, glycolides, cyclic carbonates and mixtures thereof, more preferred compounds (b11) are selected from lactones and lactides and mixtures thereof, most preferred are selected from lactides. In this variant, compound (b1) forms a moiety that links the polycyclic ether polyol (a) to the linking compound (b2) that also links to the (meth)acrylating compound (c) in a sequence:
(a)*-(b1)*-(b2)*-(c)*, wherein
(a)*, (b2)* and (c)* are residues of respectively (a), (b2) and (c)
(b1)* is a moiety formed from (b1).

Compound (b1) has typically at least one group reactive towards hydroxyl groups and at least one group reactive towards the linking compound (b2). This last group can be originally present on compound (b1) or be the result of the reaction of (b1) with the polyol. The reactions between (a) and (b1) and between (b1) and (b2) can be conducted according to any suitable method. For instance, an adduct between the polycyclic ether polyol (a) and the linking compound (b1) may first be formed followed by the reaction with compound (b2) and compound (c). These steps are generally conducted under heat and in the presence of one or more catalysts. Although solvent is not required, it may be used to facilitate the heat and mass transfer and one or more polymerization inhibitors may be added during or after the reaction. As will be apparent to the skilled person, depending on the equivalent ratio of compound (b1) to the hydroxyl groups of the polycyclic ether polyol (a) and on the reaction conditions, some oligomerization or polymerization of compound (b1) can take place. The number of repeating units of the moiety (b1)* of the adduct is generally from 1 to 10, preferably from 1 to 5, more preferably from 1 to 2. These units are randomly spread over the hydroxyl groups of the polycyclic ether polyol (a).

In a third embodiment of the present invention wherein a linker (b) is present, the (meth)acrylated compound (A) may be prepared from a polycyclic ether polyol (a), a linking compound (b1) selected from compounds (b11) and/or from compounds (b12) and a (meth)acrylating compound (c1) selected from unsaturated acids and/or suitable equivalents thereof. In this third embodiment, the compound (b1) links the polycyclic ether polyol (a) to the (meth)acrylating compound (c1). Compound (A) according to this second embodiment can be produced in many ways. The compound (A) may for instance be prepared by a process comprising a first step wherein the polycyclic ether polyol is reacted with the linking compound (b1) selected from (b11) and/or (b12) as described in the variant supra to form an adduct, and a second step comprising the reaction of the adduct obtained in the first step with one or more suitable (meth)acrylating compounds (c1). The reaction is generally conducted under heat and in the presence of one or more catalysts. Although solvent is not required, it may be used to facilitate the heat and mass transfer and one or more polymerization inhibitors may be added during or after the reaction. In this embodiment, the number of repeating units of the formed moiety (b1)* of the adduct is generally from 1 to 10, preferably from 1 to 5, more preferably from 1 to 2. Preferred linking compounds (b1) of this embodiment are selected from (b11) compounds, more preferably from lactones, lactams, lactides, glycolides, cyclic carbonates and mixtures thereof, most preferably from lactones and lactides and mixtures thereof.

In an embodiment of the first aspect, the amount of radiation curable oligomer (B) in the resin composition (I) may be 90 wt% or less, preferably 80wt% or less, more preferably 70 wt% or less, yet more preferably 50wt% or less, even more preferably 30wt% or less, yet even more preferably 25wt% or less and most preferably 20wt% or less. For instance, the amount of radiation curable oligomer (B) in the resin composition (I) may be from 0 to 25wt% or from 0 to 20wt%.

In some embodiments, the amount of radiation curable oligomer (B) in the resin composition (i) may be 1wt% or more, 2% or more, 5% or more, 10% or more, or 15% or more. Any minimum amount cited above may be combined with any maximum amount cited above. For instance, the amount of radiation curable oligomer (B) in the resin composition (I) may be 1wt% or more and 90wt% or less.

In an embodiment of the first aspect, the radiation curable oligomer (B) may be a (meth)acrylated oligomer (B).

The radiation curable oligomer (B) can vary widely and include a variety of backbone structures in addition to the radiation curable moiety, such as but not limited to urethane, epoxy, polyester, polyether or acrylic functionality.

For instance, the radiation curable oligomer (B) may be selected from polyester (meth)acrylates oligomers, urethane (meth)acrylates oligomers, alkoxylated (meth)acrylated oligomers, epoxy (meth)acrylates oligomers, aminated (meth)acrylates oligomers, (meth)acrylated (meth)acrylics oligomers, (meth)acrylic (co)polymers oligomers or a combination thereof.

Examples of suitable polyester (meth)acrylates are acrylated epoxidized soybean oil compounds like EBECRYL® 860 (Cytec), fatty acid containing polyester (meth)acrylates like EBECRYL® 870, EBECRYL® 657, EBECRYL® 450 (Cytec), and polyester (meth)acrylates like EBECRYL® 800, EBECRYL® 884, EBECRYL® 885, EBECRYL® 810 and EBECRYL® 830 (Cytec), Maleinated Acrylated Epoxidized Oils (MAESO, MAELO).

Examples of suitable epoxy (meth)acrylates are the di(meth)acrylate of diglycidyl ether of Bisphenol A (BADGED(M)A), and modifications thereof (see for instance EBECRYL® 3700 or EBECRYL® 600, EBECRYL® 3701, EBECRYL® 3703, EBECRYL® 3708, EBECRYL® 3720 and EBECRYL® 3639 from Cytec). Other types of epoxy acrylate include EBECRYL® 860 (epoxidized soya oil acrylate)

Examples of suitable urethane (meth)acrylates are EBECRYL® 284, EBECRYL® 294, EBECRYL® 264, EBECRYL® 210, EBECRYL® 220, EBECRYL® 230, EBECRYL® 4858, EBECRYL® 8701, EBECRYL® 8402, EBECRYL® 8405, EBECRYL® 8465, EBECRYL® 8301, EBECRYL® 1290 (Cytec).

Examples of suitable aminated (meth)acrylates are EBECRYL® 80, EBECRYL® 81, EBECRYL® 83, EBECRYL® 7100, EBECRYL®P115, EBECRYL® P116 and others. Examples of suitable (meth)acrylic (co)polymers that may be used are EBECRYL® 745 and/or EBECRYL® 1200.

As an example, the radiation curable oligomer (B) may be EBECRYL® 4858 (a bifunctional aliphatic urethane acrylate available from Cytec).

The radiation curable oligomers (B) may typically be viscous liquids ranging from a few thousand mPa.s to greater than one million mPa.s at 25°C. For instance, their viscosity may range from 2000 to 1500000 mPa.s at 25°C. Preferably, their viscosity may be from 2000 to 100000 mPa.s at 25°C, more preferably from 2000 to 50000 mPa.s at 25°C. They typically have a molecular weight (MW) between 500 and 20000 Daltons. An oligomer is typically composed of only a few monomer units such as a dimer, trimer, tetramer etc.

The presence of radiation curable oligomer (B) typically permits to increase tensile strength and toughness by reducing the brittleness. However, the presence of radiation curable oligomer (B) typically has a negative impact on the glass transition temperature and the thermal resistance. It also tends to increase the viscosity.

In an embodiment of the first aspect, the amount of radiation curable monomer (C) in the resin composition (I) may be 80 wt% or less, preferably 70 wt% or less, more preferably, 50wt% or less, yet more preferably 30wt% or less and most preferably 25wt% or less.

For instance, the amount of radiation curable monomer (C) in the resin composition (I) may be from 0 to 25wt% or from 0 to 20wt%.

In some embodiments, the amount of radiation curable monomer (C) in the resin composition (i) may be 1wt% or more, 2% or more, 5% or more, 10% or more, or 15% or more. Any minimal amount cited above may be combined with any maximal amount cited above. For instance, the amount of radiation curable monomer (C) in the resin composition (I) may be 1wt% or more and 80wt% or less.

Relatively low content of radiation curable monomer (C) are advantageous because, although they may have an interesting viscosity lowering effect, such monomers usually impact negatively the shrinkage of the liquid composition upon curing. This may lead to warpage and poor part fit-up. Also, high amount of radiation curable monomer (C) compared to (meth)acrylated compound (A) tend to lower the thermal resistance of the composite composition.

In an embodiment of the first aspect, the optional radiation curable monomer (C) may be selected from the group consisting of mono and poly(meth)acrylated monomers such as for instance butyl(meth)acrylate, methyl(meth)acrylate, ethyl methacrylate, isobutyl(meth)acrylate, 2-ethylhexyl(meth)acrylate, cyclohexyl(meth)acrylate, n-hexyl(meth)acrylate, isobornyl(meth)acrylate, iso-octyl(meth)acrylate, n-lauryl(meth)acrylate, octyl/decyl(meth)acrylate, 2-hydroxyethyl(meth)acrylate, phenoxyethyl(meth)acrylate, nonylphenolethoxylate mono(meth)acrylate, styrene, 2-(-2-ethoxyethoxy)ethyl(meth)acrylate, 2-butoxyethyl(meth)acrylate, 1,6-hexanediol di(meth)acrylate (HDD(M)A), ethoxylated and/or propoxylated hexanediol di(meth)acrylate, methacrylated fatty acid, di or tri propylene glycol di(meth)acrylate (DPGD(M)A, TPGD(M)A), di or tri ethylene glycol di(meth)acrylate, ethoxylated and/or propoxylated neopentylglycol di(meth)acrylate, tricyclodecanedi(meth)acrylate, tricyclodecanedimethanol di(meth)acrylate, tris(2-hydroxyethyl) isocyanurate triacrylate (ISOTRI) as well as the diacrylate, pentaerythritol tri(meth)acrylate (PETI(M)A) and the ethoxylated and/or propoxylated derivatives thereof, trimethylolpropane tri(meth)acrylate (TMPT(M)A) and the ethoxylated and/or propoxylated derivatives thereof, di-trimethylolpropane tri(meth)acrylate (diTMPT(M)A) glycerol tri(meth)acrylate and the ethoxylated and/or propoxylated derivatives thereof, bisphenol A di(meth)acrylate and the ethoxylated and/or propoxylated derivatives thereof, phenylglycidylether(meth)acrylate and the ethoxylated or/and propoxylated derivatives thereof, the (meth)acrylates obtained from the esterification with (meth)acrylic acid of aliphatic glycidyl ethers, especially those wherein the alkyl chain comprises from 6 to 24 carbon atoms, more preferably from 8 to 18 carbon atoms, and/or of glycidyl esters of saturated and unsaturated carboxylic acids, especially the glycidyl esters of long chain alkyl carboxylic acids wherein the alkyl chain comprises from 6 to 24 carbon atoms, more preferably from 8 to 18 carbon atoms. As an example, the radiation curable monomer (C) may be dipropylene glycol diacrylate available from Cytec or Isobornyl acrylate available from Cytec.

In a preferred embodiment, at least one of (B) and (C) may be present. For instance, both (B) and (C) may be present.

Photo- and/or thermal initiators (D) where present typically are added in an amount of from 0.1 to 10%, by weight relative to the total weight of the resin composition. Examples of suitable photoinitiators include but are not limited to an aryl ketone type photoinitiator (such as an acetophenone, a benzophenone, an alkylaminobenzophenone, a benzyl, a benzoin, a benzoin ether, a benzoin dimethyl ketal, a benzoyl benzoate or an α-acyloxime ester), a sulfur-containing photopolymerization initiator (such as a sulfide or a thioxanthone), an acylphosphine oxide (such as an acyldiarylphosphine oxide) or other photopolymerization initiators. The photopolymerization initiator may be used as a mixture of at least two types thereof in combination. Further, the photopolymerization initiator may be used in combination with a synergist such as an amine. Examples of suitable polymeric photoinitiators (D) that may be used in the context of the present invention are P36, P39 and the like.

Examples of thermal initiators include but are not limited to benzoyl peroxides, t-amylperoxides, methyl cyclohexanone peroxide, cumene hydroperoxide, diisopropyl benzene peroxide, di-t-butyl peroxide, t-butyl peroxide and the like. In an embodiment of the first aspect, the composite composition may comprise at least 5wt%, preferably at least 10wt%, more preferably at least 15wt%, yet more preferably at least 20wt%, yet more preferably at least 25wt% and most preferably at least 30wt% of said fibrous reinforcement material (II) relative to the total weight of the resin composition (I) and the fibrous reinforcement material (II)

In an embodiment of the first aspect, the composite composition may comprise at most 70wt%, preferably at most 60wt% and more preferably at most 50wt% of fibrous reinforcement material (II). Any minimal amount cited above may be combined with any maximal amount cited above. For instance, the composite composition may comprise at least 1wt% and at most 70wt% or at least 5w% and at most 70w% of a fibrous reinforcement material (II).

Examples of fibrous reinforcement materials (II) include but are not limited to boron fibers, carbon fibers, aramid fibers, ceramic fibers, glass fibers, natural (such as but not limited to hemp, jute, flax, kenaf, leaf fibers) or synthetic fibers as described in US 8012573, EP2226171, US 7250209. Preferably, the fibrous reinforcing material (II) may be a fibrous glass material.

Examples of suitable fibrous glass materials include but are not limited to glass fibers and glass fabrics (e.g. glass cloths and nonwoven glass fabrics). Among them, glass fibers, glass cloths and nonwoven glass fabrics are preferred. Glass cloths are most preferred. As for the glass species, there may be mentioned E glass, C glass, A glass, S glass, D glass, NE glass, T glass, quartz, low inductivity glass, high inductivity glass and so forth. Preferred among them are E glass, S glass, T glass and NE glass, which readily available. In cases where a glass cloth or nonwoven glass fabric is used as the fibrous reinforcing material, the manner of weaving of filaments is not restricted but includes plain weave, moss stitch-like weave, satin weave, and twill weave, among others. Plain weave is preferred, however. Generally, the glass cloth thickness is from 30 to 200 µm, usually from 40 to 150 µm. The glass cloth, nonwoven glass fabric or other glass fiber fabric may be used either in the form of one single sheet or in the form of a laminate comprising a plurality of sheets.

As an example, the fibrous reinforcement material (II) may be S-Glass type 4522-30" F81 available from Hexcel.

The composite composition may also include additional ingredients such as inert polymers or performance enhancing or modifying agents.

For instance, the composite composition may include an inert (non-radiation curable) polymer including but not limited to a polyester, polyacrylic and/or polyurethane. Preferably the amount of non-radiation curable polymer is less than 30 w%, more preferably less than 15 w%, yet more preferably less than 10 w%, yet more preferably less than 5 wt% and most preferably 0 wt% with respective to the total composite composition without the reinforcing filler material (II). The performance enhancing or modifying agents, by way of example, may be selected from non-fibrous fillers, flexibilizers, toughening agents/particles, core shell rubbers, flame retardants, wetting agents, pigments/dyes, plasticisers, UV absorbers, anti-fungal compounds, fillers, viscosity modifiers/flow control agents, tackifiers, stabilisers, and inhibitors (copy US 8263503). Examples of toughening agents are described in US 8263503.

Examples of non-fibrous fillers include but are not limited to alumina trihydrate, barium sulfate, calcium carbonate, clay, glass microspheres, glass beads, glass flakes, glass powders, milled glass species, quartz, gypsum, kaolin, metal or metal oxide fillers, carbon black, mica, organic fillers (wood flour, corncobs, rice/peanut hulls, and nutshells), silicas, talc, wollastonite and other nano-sized materials.

In an embodiment of the first aspect, the composite composition may comprise less than 15%, preferably less than 10%, more preferably less than 5% and most preferably 0% (with respect to the total composite composition without the reinforcing filler material) inert polyesters prepared from a polyol component comprising at least one polycyclic ether polyol and from a polyacid component. By "inert" it is meant "non-radiation curable".

In an embodiment of the first aspect, the composite composition may comprise less than 15%, preferably less than 10%, more preferably less than 5% and most preferably 0% (with respect to the total composite composition without the reinforcing filler material) of an inert polyester. In an embodiment of the first aspect, the composite composition may comprise less than 15%, preferably less than 10%, more preferably less than 5% and most preferably 0% (with respect to the total composite composition without the reinforcing filler material) of inert resins.

In an embodiment of the first aspect, the composite composition may be free of styrene. This is advantageous because styrene is considered hazardous and potentially carcinogenic.

In a second aspect, the present invention relates to a composite article obtainable by the crosslinking of the composite composition according to any one of the preceding claims. In an embodiment of the second aspect, the composite article may have a glass transition temperature of at least 80°C, preferably at least 90°C, more preferably at least 100°C. This is advantageous as it imparts to the article a higher thermal resistance. The glass transition temperature of the cured composite was determined using dynamic mechanical analysis and the glass transition temperature is identified as the peak of the tan delta at a frequency of 1 hertz, ASTM E1640.

The cured resin composition (A) of present invention after being crosslinked and without any reinforcement fibers is characterized by having a storage modulus measured at 20°C of generally greater than 2 GPa, preferably greater than 2.5 GPa, and more preferably greater than 3 GPa.

In a third aspect, the present invention relates to the use of the composite composition according to any embodiment of the first aspect for forming a composite article.

In an embodiment, this use may consists in a method of generating a composite article comprising crosslinking the composite composition according to any embodiment of the first aspect by using actinic irradiation, electron beam and/or heating. The composite can be cured by exposing the composite material to actinic radiation such as ultraviolet radiations, X-rays or by electron beam. They are typically cured by ultraviolet irradiation, generally in the presence of photoinitiator, which may be a polymeric photoinitiator. They can also be cured by electron-beam irradiation, allowing the use of compositions free of photoinitiator. A preferred means of radiation curing is ultraviolet radiation. Any ultraviolet light source, as long as a part of the emitted light can be absorbed by the photo-initiator(system), may be employed as a radiation source. UV radiation sources include high or low-pressure mercury lamps, a cold cathode tube, xenon lamps, a black light, an ultraviolet LED, an ultraviolet laser, and a flash light.

Of these, the preferred source is one exhibiting a relatively long wavelength UV-contribution having a dominant wavelength of 300-400 nm. Specifically, a UV-A light source is preferred. Such type of light sources is described in US 7268172.

Curing time and conditions may vary according to the constituents of the composition, the thickness of the composite and the active energy ray source used. Usually curing is achieved by irradiation for about 1 sec to about 30 min. Further, for the purpose of completing the curing reaction, a heat treatment may be carried out after irradiation with active energy rays.

Although not specifically mentioned in the patent, curing of said composite composition can be done by thermal heating whereby the polymerization reaction is initiated by a thermal radical initiator. Such type of initiators is commercially available from Dupont and Arkema under the tradenames "VAZO", and "LUPEROX".

In a fourth aspect, the present invention relates to a process for forming a composite composition comprising contacting a resin composition as described in any embodiment of the first aspect with at least 1wt% of a fibrous reinforcement material (II) relative to the total weight of the resin composition (I) and the fibrous reinforcement material (II) by a liquid composite manufacturing process.

In an embodiment of the fourth aspect, said liquid composite manufacturing process may be selected from spray-up, hand layup, resin infusion, vacuum bagging, pultrusion, filament winding, and stereolithography.

In an embodiment of the fourth aspect, said resin infusion may be selected from resin transfer molding (RTM), vacuum assisted resin transfer moulding (VARTM), Resin infusion under flexible tooling (RIFT), structural reaction injection molding (SRIM), and Seemann Composites Resin Infusion Molding Process (SCRIMP).

In a fifth aspect, the present invention relates to the use of the composite composition according to any embodiment of the first aspect for repairing an article part made of a composite material.

In a sixth aspect, the present invention relates to a substrate coated with a composite composition according to the first aspect of the present invention. The composite composition can be cured or not cured. The substrate can be coated with a layer of a composite composition according to the first aspect of the present invention. The substrate can be any substrate. For instance, the substrate can be selected from wood, metal, plastics, paper, leather, or textile. The substrate can also be a composite comprising a matrix resin and a filler. This composite does not need to be according to the present invention.

The invention will now be described in more details in the examples below, which in no way are intended to be limited.

Throughout the invention and in particular in the examples the following measuring methods have been applied.

Viscosity: Cone & plate viscosity at a given temperature, usually 25°C, and a given rotation speed of the spindle, also referred to as shear rate.

Renewable Raw Material Content: The Renewable Raw Material Content is calculated as the weight ratio of the renewable raw materials versus the total weight of raw materials.

Glass transition temperature (Tg) and storage modulus (E') from DMA (ASTM E1640):

The glass transition temperature and storage modulus of the isolated coating pieces was measured by dynamic thermomechanical analysis using a DMA800 instrument of TA Instruments. Rectangular samples (6 mmx 9 mmx0.8 mm) were cut from the coating and clamped vertically in the sample holder for tensile deformation. The frequency of the sinusoidal strain was 1 Hz and the amplitude was typically between 0.3% and 1%. The heating rate was 3 °C min⁻¹. The temperature at the maximum of the loss modulus peak was used to establish the glass transition temperature (Tg).

Flexural modulus and strength - three point bending test (ASTM D790)

Flexural strength and modulus are determined by three point bending test. A sample of following dimension (45 mm x 10 mm x 0.8 mm) is placed on supports and a center load is applied until failure occurs and the load of failure is the ultimate flexural strength. Cross-head speed of center load is 10 mm/min. Measurements are done at 22°C and at a relative humidity of 55 %.

### Fiber content

Composite samples were burned at 615 °C in a muffle furnace for 1 hour in order to burn off the resin and to determine percentage of the components.

### Shrinkage (volume contraction)

The volume contraction due to polymerization (often referred to as polymerization of curing shrinkage) was determined from the density change between the liquid and the cured solid state and is returned as ρl/ρs-1. The liquid density, ρl, was measured using a calibrated pycnometer. The density of the cured coating, rs, was determined by immersion of a small circular piece (diameter = 6 mm) of free-standing film in a gradient density column (Davenport Instruments). The density column was prepared using carefully degassed solutions of sodium bromide. The column was calibrated in the range 1.10-1.25 using standard marker floats. The position of the samples suspended in the column was recorded after 2 h and controlled after 24 h. Deviations were generally within experimental accuracy. All density measurements were conducted at 23.0±0.5 °C.

### Examples:

### Synthetic examples

### Synthetic example 1: isosorbide diacrylate

A reactor was charged with 900 grams of isorbide diol (Polysorb P from Roquette) (11,71 eq), 891,9 grams acrylic acid (12,37 eq), 953 grams toluene, 41,25 grams methane sulphonic acid (70%), 0,89 grams Cu₂O, 2,5 grams hypophosphorous acid, 0,89 g oxalic acid, 0,18 g triphenylphosphite and 2,72 g methylhydroquinone. The reactor content was heated at 130°C until the rate of reaction slowed down as measured by collection of the esterification water. After about 17 hrs when the acid value was less than 30 mg KOH/g, the reactor was cooled down to 60°C and diluted with 371 g toluene. The reactor was charged with water and stirred for 15 minutes. Phases were let to separate at 50-60°C and the aqueous phase decanted. Washes were repeated until a cupper value below 5 ppm was reached. Then 1,58 grams trisphenylphosphite were added and heated till 95°C to distill the remaining water and the toluene. An airsparge of 1 l/hr was maintained. After distillation of the toluene at 95°C and a reduced pressure of 20 mbar, a product with a Cone & Plate viscosity of 560 mPa.s at 25°C was obtained.

### Formulation examples

### A. Comparison of the properties of a homopolymer of isosorbide diacrylate vs comparative homopolymer of dipropyleneglycol diacrylate.

Formulation example 1 : isorbide diacrylate homopolymer

Formulation example 2 : DPGDA homopolymer

**Table 1. Glass transition temperature, Storage modulus and shrinkage of isosorbide diacrylate homopolymer vs DPGDA homopolymer**

| | DMA Tg (°C) | E' at 20°C (GPa) | Volume contraction (%) |
|---|---|---|---|
| DPGDA homopolymer | 115 | 2,7 | -12,9 |
| Isorbide diacrylate homopolymer | 162 | 4,7 | -8,4 |

We observe clearly a higher glass transition temperature for the homopolymer generated from the polycyclic ether acrylate compared to a more standard acrylic monomer being DPGDA. The glass transition value for the homopolymer generated from the polycyclic ether acrylate is above 130°C. Also we observe a lower volume contraction or shrinkage for the polycyclic ether compound.

### B. Properties of crosslinked resin formulation without reinforcement filler

6 resin formulations were prepared by mixing ingredients mentioned in table 2. The compositions were degassed in a vacuum chamber and then allowed to cool to room temperature before use.

A 0.8 mm thick film was prepared as follows. Resin formulations from table 2 were poured on a sodalime glass panel treated with a release coating layer. A spacer of 0.8 mm was put on the bottom plate to control the thickness of the substrate to be generated. After this, the liquid formulation was sandwiched by covering it with a second 4 mm thick releasing agent-treated sodalime glass panel. Finally the sample was exposed for 5 min with UV light from a Panacol UV H-254 lamp put at height of 10 cm above the top glass panel. The UV irradiance measured under the top glass panel was 47 mW/cm² UV-A and 7 mW/cm UV-V (measured with EIT UV Power Puck). The free film substrate could be obtained by separating the glass panels.

**Table 2. Resin formulation composition**

| | Ex 3 | Ex 4 | Ex 5 | Ex 6 | comp Ex 1 | comp Ex 2 |
|---|---|---|---|---|---|---|
| EBECRYL®4858 | 60 | 40 | 20 | 20 | 40 | |
| EBECRYL® 600 | | | | | | 40 |
| DPGDA | | | | | 40 | 40 |
| Isosorbide diacrylate | 20 | 40 | 60 | 80 | | |
| Isobornyl acrylate | 20 | 20 | 20 | | 20 | 20 |
| Additol CPK | 1 | 1 | 1 | 1 | 1 | 1 |
| Viscosity C&P at 25°C (mPa.s) | 673 | 355 | 204 | 724 | 60 | 167 |

EBECRYL® 4858 is aliphatic difunctional urethane acrylate available from Cytec. EBECRYL® 600 is difunctional epoxy acrylate available from Cytec

**Table 3 : Glass transition temperature, storage modulus at 20 and 80°C and volume contraction.**

| | Ex 3 | Ex 4 | Ex 5 | Ex 6 | comp Ex 1 | comp Ex 2 |
|---|---|---|---|---|---|---|
| Tg at max tan delta (°C) | 105 | 117 | 139 | 149 | 91 | 95 |
| E' 20°C (GPa) | 3,8 | 4,3 | 4,7 | 5,2 | 3,4 | 3,7 |
| E' 80°C (GPa) | 1,5 | 2 | 2,7 | 2,8 | 0,7 | 1 |
| Volume contraction (%) | -4.2 | -5.1 | -6.1 | -5.9 | -9.6 | -8.6 |

Data in table 3 show that formulations with an increasing content of isosorbide diacrylate impart higher Tg values as well as a higher storage moduli (expressed as E') especially at elevated temperature. A lower volume contraction is also observed with formulations comprising isosorbide diacrylate.

### C. Properties of composite material with glass fiber reinforcement

6 composite sheets were prepared by resin infusion of glass fiber cloth (S-glass Type 4522-30" F81 available from Hexcel) with resin compositions (examples 3-6) from table 2 as shown schematically in Fig. 1.

Fig.1 schematically represents a method for forming a composite composition according to an embodiment of the present invention. An assembly (1) is provided under a UV lamp (2) for curing the resin composition. The assembly is composed of a bottom glass plate (3), on which a first flow mesh (Green flow 75 from Airtech) (4), glass fiber plies (5) and a second flow mesh (4) are provided in series; and of an upper glass plate (9) on top of the glass fiber plies (5) and the flow meshes (4). The assembly is enclosed in a vacuum bag (Ipplon® KM1300 from Airtech) (6). The assembly is provided with a resin inlet (7) and a vacuum outlet (8). The resin enters the assembly (1) by the resin inlet (7) and is contacted with the glass fiber plies (5) by operating vacuum at the vacuum outlet (8).

More specifically, the six composite sheets (i.e. a composite composition according to an embodiment of the second aspect) with a thickness of about 800 µm were prepared by vacuum infusion method. In order to obtain a flat surface on both sides of the sheet, the infusion of the glass fiber cloths (5) was done between two releasing agent-treated glass plates (3 and 9) enclosed in a vacuum bag (6) without making use of any peel ply. Cure was completed after 10 min exposure to the UV light from a Panacol UV H-254 lamp (2) put at height of 10 cm above the top glass panel (9). The UV irradiance was measured under the top glass (9) panel was 47 mW/cm2 UV-A and 7 mW/cm UV-V (measured with EIT UV Power Puck). 4 fiber plies (5) were used to prepare the composite material.

Fiber content of the composites was determined by burning off the resin matrix at 615 °C in a muffle furnace for 1 hour. Dynamic mechanical analysis was used to determine the storage modulus and glass transition temperature (see table 4).

**Table 4. Glass transition temperature and storage modulus of cured composite samples**

| | Fiber content (W%) | Tg (tan dmax) (°C) | E' (20 °C) - GPa | E' (80 °C) - GPa |
|---|---|---|---|---|
| Ex 5 | 35,3 | 109 | 11,5 | 9,3 |
| Ex 6 | 37,5 | 126 | 12,4 | 10,8 |
| Ex 7 | 35,8 | 145 | 12,3 | 10,7 |
| Ex 8 | 36,3 | 171 | 14,8 | 12,9 |
| comp Ex 3 | 37,5 | 89 | 9,8 | 6,2 |
| comp Ex 4 | 38,4 | 92 | 10,4 | 6,4 |

Higher glass transition values and storage modili (E') are obtained for the isorbide diacrylate comprising formulations.

Three point bending test (ASTM D7900) was used to determine the flexural strength and flexural modulus of the composites. The results of the mechanical testing are presented in table 5.

**Table 5. Flexural modulus and flexural strength of composite samples determined by 3 point bending test**

| | Fiber content (w%) | Flexural modulus (GPa) | Flexural strength (MPa) |
|---|---|---|---|
| composite based on Ex 3 | 35,0 | 10,0 | 321,0 |
| composite based on Ex 4 | 37,0 | 10,9 | 325,0 |
| composite based on Ex 5 | 34,7 | 9,9 | 305,0 |
| composite based on Ex 6 | 37,0 | 11,2 | 321,0 |
| composite based on comparative Ex 1 | 38,7 | 10,2 | 312,0 |
| composite based on comparative Ex 2 | 38,3 | 9,8 | 246,0 |

No large differences were observed for the flexural modulus due to the fibers imparting most of the rigidity in the composite. All radiation curable compositions of the invention were suitable to generate composite materials with sufficiently high flexural modulus and flexural strength.

## Claims

1. Composite composition comprising:
I. a resin composition (I), comprising
A. at least one (meth)acrylated compound (A) prepared from:
(a) at least one polycyclic ether polyol (a),
(b) optionally, at least one linking compound (b1) and/or (b2), wherein the linking compound (b1) is selected from cyclic compounds (b11) containing at least one -C(O)-X- group in the cycle where X = O or NH, from hydroxy acids (b12) and/or from alkylene oxides (b13) containing from 2 to 4 carbon atoms, and wherein the linking compound (b2) is selected from epihalohydrins or polyisocyanates,
(c) at least one (meth)acrylating compound (c), wherein if both compounds (b1) and (b2) are being used, compound (b1) forms a moiety that links the polycyclic ether polyol (a) to the linking compound (b2) which attaches to the (meth)acrylating compound (c),
B. optionally, one or more radiation curable oligomer (B),
C. optionally, one or more radiation curable monomer (C),
D. optionally, one or more photo- and/or thermal initiators (D), and
II. at least 1wt% of a fibrous reinforcement material (II) relative to the total weight of the resin composition (I) and the fibrous reinforcement material (II).

2. Composite composition according to claim 1, comprising at least 5wt%, preferably at least 30wt% of said fibrous reinforcement material (II).

3. Composite composition according to claim 1 or claim 2, wherein said at least one polycyclic ether polyol (a) is selected so that the homopolymer of the corresponding (meth)acrylated compound (A) has a glass transition temperature of at least 130°C.

4. Composite composition according to any one of the preceding claims, wherein the resin composition (I) comprises from 10 to 100 weight percent of the (meth)acrylated compound (A); from 0 to 90 weight percent of one or more radiation curable oligomers (B); from 0 to 80 weight percent of one or more radiation curable monomers (C); and from 0 to 10 weight percent of one or more photoinitiators (D).

5. Composite composition according to any one of the preceding claims, wherein the polycyclic ether polyol is isosorbide.

6. Composite composition according to any one of the preceding claims, where the (meth)acrylated compound (A) is isosorbide diacrylate or isosorbide dimethacrylate.

7. Composite composition according to any one of the preceding claims having a viscosity not higher than 10000 mPa.s at 25°C.

8. Composite composition according to any one of the preceding claims, wherein resin composition (I) has a glass transition temperature of not lower than 80°C, preferably not lower than 100°C after crosslinking.

9. Composite composition according to any one of the preceding claims, wherein the fibrous reinforcement material (II) is a fibrous glass filler material.

10. Composite composition according to claim 9, wherein the fibrous glass filler material is a glass fabric, preferably a glass cloth.

11. Composite article obtainable by the crosslinking of the composite composition according to any one of the preceding claims.

12. Process for forming a composite composition according to any one of claims 1-10, comprising contacting i) a resin composition (I) and ii) at least 1wt% of a fibrous reinforcement material (II) relative to the total weight of the resin composition (I) and the fibrous reinforcement material (II) by a liquid composite manufacturing process, the resin composition (I) comprising
A. at least one (meth)acrylated compound (A) prepared from:
(a) at least one polycyclic ether polyol (a),
(b) optionally, at least one linking compound (b1) and/or (b2), wherein the linking compound (b1) is selected from cyclic compounds (b11) containing at least one -C(O)-X- group in the cycle where X = O or NH, from hydroxy acids (b12) and/or from alkylene oxides (b13) containing from 2 to 4 carbon atoms, and wherein the linking compound (b2) is selected from epihalohydrins or polyisocyanates,
(c) at least one (meth)acrylating compound (c), wherein if both compounds (b1) and (b2) are being used, compound (b1) forms a moiety that links the polycyclic ether polyol (a) to the linking compound (b2) which attaches to the (meth)acrylating compound (c),
B. optionally, one or more radiation curable oligomer (B),
C. optionally, one or more radiation curable monomer (C), and
D. optionally, one or more photo- and/or thermal initiators (D)..

13. Use of the composite composition according to any one of claims 1-10 for repairing an article part made of a composite material.

14. Use of the composite composition according to any one of claims 1-10 for forming a composite article.

15. Use according to claim 13 or claim 14 involving a step where actinic irradiation or electron beam and/or heat is applied on the composite composition.
